# EUROPEAN PATENT APPLICATION

(11) **EP 4 831 914 A1**
(43) Date of publication of application: **28.10.2026**
(21) Application number: 26174073.2
(22) Date of filing: 22.04.2026
(51) Int. Cl.: G06T 7/00

(54) **INSPECTION SYSTEM AND METHOD FOR INSPECTING A COMPONENT FOR DEFECTS**

(30) Priority: 23.04.2025 US 202519187569
(71) Applicant: RTX Corporation, Farmington, CT 06032 (US)
(72) Inventor: OSBORNE, Richard W., Stafford Springs, 06076 (US); LORE, Kin Gwn, Braintree, 02184 (US); ABREU CALFA, Bruno, Vernon, 06066 (US)
(74) Representative: Dehns

(57) **Abstract**

An inspection system (400) includes an imaging device (402), a 3D scanning device (404), and a computer system (406). The imaging device (402) is configured to capture a 2D image (420) of a surface (422) of a component (412). The 2D image (420) includes RGB image data (424). The 3D scanning device (404) is configured to capture surface depth data (426) of the component (412) at the surface (422). The computer system (406) is configured to receive the RGB image data (424) captured by the imaging device (402) and the surface depth data (426) captured by the 3D scanning device (404), estimate surface normal data (430) of the surface using the surface depth data (426), apply the RGB image data (424) to the surface normal data (430) to generate an RGB-augmented surface image (428), classify the RGB-augmented surface image (428) in at least one selected defect category (432), and determine, for each of the at least one selected defect category (432), a probability that the RGB-augmented surface image (428) indicates damage of the component (412).

## Description

### TECHNICAL FIELD

This disclosure relates generally to inspection of gas turbine engine components and, more particularly, to inspection systems and methods for gas turbine engine components.

### BACKGROUND INFORMATION

Various systems and methods are known in the art for inspecting gas turbine engine components for defects. While these known inspection systems and methods have various benefits, there is still room in the art for improvement.

### SUMMARY

According to an aspect of the present invention, an inspection system for inspection of a component for a gas turbine engine includes an imaging device, a three-dimensional (3D) scanning device, and a computer system. The imaging device is configured to capture a two-dimensional (2D) image of a surface of the component. The 2D image includes RGB image data. The 3D scanning device is configured to capture surface depth data of the component at the surface. The computer system includes a processor connected in signal communication with a non-transitory memory storing instructions which, when executed by the processor, cause the processor to receive, at the processor, the RGB image data captured by the imaging device and the surface depth data captured by the 3D scanning device, estimate, by the processor, surface normal data of the surface using the surface depth data, apply, by the processor, the RGB image data to the surface normal data to generate an RGB-augmented surface image, classify, by the processor, the RGB-augmented surface image in at least one selected defect category, and determine, by the processor for each of the at least one selected defect category, a probability that the RGB-augmented surface image indicates damage of the component.

In an embodiment of the above, the instructions, when executed by the processor, may further cause the processor to classify the RGB-augmented surface image in the at least one selected defect category by executing a neural network trained to identify the damage in each of the at least one selected defect category.

In an embodiment according to any of the previous embodiments, the instructions, when executed by the processor, may further cause the processor to estimate the surface normal data by extracting a 3D point cloud from the surface depth data.

In an embodiment according to any of the previous embodiments, the instructions, when executed by the processor, may further cause the processor to estimate the surface normal data by projecting the surface normal data to a viewpoint perspective of the RGB image data.

In an embodiment according to any of the previous embodiments, the at least one selected defect category may include one or more of a warping category, a stretching category, an edge defect category, an erosion category, a nick category, a crack category, or a dent category.

In an embodiment according to any of the previous embodiments, the RGB-augmented surface image may include a plurality of pixels, and the instructions, when executed by the processor, may further cause the processor to determine the probability that the RGB-augmented surface image indicates damage of the component for each of the plurality of pixels.

In an embodiment according to any of the previous embodiments, the instructions, when executed by the processor, may further cause the processor to generate a defect probability map for each of the at least one selected defect category using the probability determined for each of the plurality of pixels.

In an embodiment according to any of the previous embodiments, the instructions, when executed by the processor, may further cause the processor to apply the defect probability map to a 3D model of the component stored in the non-transitory memory.

In an embodiment according to any of the previous embodiments, the instructions, when executed by the processor, may further cause the processor to determine a presence or an absence of the damage by comparing the probability to a threshold, the presence of the damage may be identified where the probability meets or exceeds the threshold, and the absence of the damage may be identified where the probability is less than the threshold.

In an embodiment according to any of the previous embodiments, the computer system may be connected in signal communication with the imaging device and the 3D scanning device, and the instructions, when executed by the processor, may further cause the processor to control the imaging device to capture the 2D image and the 3D scanning device to capture the surface depth data.

In an embodiment according to any of the previous embodiments, the inspection system may further include a positioning system, the imaging device and the 3D scanning device may be attached to the positioning system, and the instructions, when executed by the processor, may further cause the processor to control the positioning system to position the imaging device and the 3D scanning device relative to the component.

According to another aspect of the present invention, a method for inspecting a component for a gas turbine engine with an inspection system includes capturing a two-dimensional (2D) image of a surface of the component with an imaging device. The 2D image includes RGB image data. The method further includes capturing surface depth data at the surface with a three-dimensional (3D) scanning device, receiving, by a processor of a computer system, the RGB image data and the surface depth data, estimating, by the processor, surface normal data of the surface using the surface depth data, applying, by the processor, the RGB image data to the surface normal data to generate an RGB-augmented surface image, classifying, by the processor, the RGB-augmented surface image in at least one selected defect category, and determining, by the processor for each of the at least one selected defect category, a probability that the RGB- augmented surface image indicates the damage of the component.

In an embodiment of the above, classifying the RGB-augmented surface image in the at least one selected defect category may include executing, by the processor, a neural network trained to identify the damage in each of the at least one selected defect category.

In an embodiment according to any of the previous embodiments, the neural network may be a convolutional neural network configured to apply an image segmentation technique to the RGB-augmented surface image.

In an embodiment according to any of the previous embodiments, the at least one selected defect category may include one or more of a warping category, a stretching category, an edge defect category, an erosion category, a nick category, a crack category, or a dent category.

In an embodiment according to any of the previous embodiments, the method may further include subdividing, by the processor, the RGB-augmented surface image into a plurality of RGB-augmented surface image portions, and classifying the RGB-augmented surface image in the at least one selected defect category may include classifying each of the RGB-augmented surface image portions in the at least one selected defect category.

In an embodiment according to any of the previous embodiments, the RGB-augmented surface image may include a plurality of pixels, the method may further include determining, by the processor, the probability that the RGB- augmented surface image indicates the damage of the component for each of the plurality of pixels and generating, by the processor, a defect probability map for each of the at least one selected defect category using the probability determined for each of the plurality of pixels.

In an embodiment according to any of the previous embodiments, the method may further include applying, by the processor, the defect probability map to a 3D model of the component to generate a 3D defect probability map.

In an embodiment according to any of the previous embodiments, the method may further include determining, by the processor, a presence or an absence of the damage by comparing the probability to a threshold, the presence of the damage may be identified where the probability meets or exceeds the threshold, and the absence of the damage may be identified where the probability is less than the threshold.

In an embodiment according to any of the previous embodiments, the method may further include applying, by the processor, at least one predetermined acceptance rule to the damage, in response to identifying the presence of the damage, to determine that the component is unacceptable, and repairing or replacing the component in response to determining the component is unacceptable.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 schematically illustrates a cutaway, side view of a gas turbine engine for an aircraft propulsion system, in accordance with one or more embodiments of the present disclosure.
FIG. 2 illustrates a perspective view of a bladed disk for a gas turbine engine rotor, in accordance with one or more embodiments of the present disclosure.
FIG. 3 illustrates a block diagram depicting a method for inspecting a component, in accordance with one or more embodiments of the present disclosure.
FIG. 4 schematically illustrates a component inspection system, in accordance with one or more embodiments of the present disclosure.
FIG. 5 schematically illustrates an exemplary component inspection process for the component inspection system, in accordance with one or more embodiments of the present disclosure.

### DETAILED DESCRIPTION

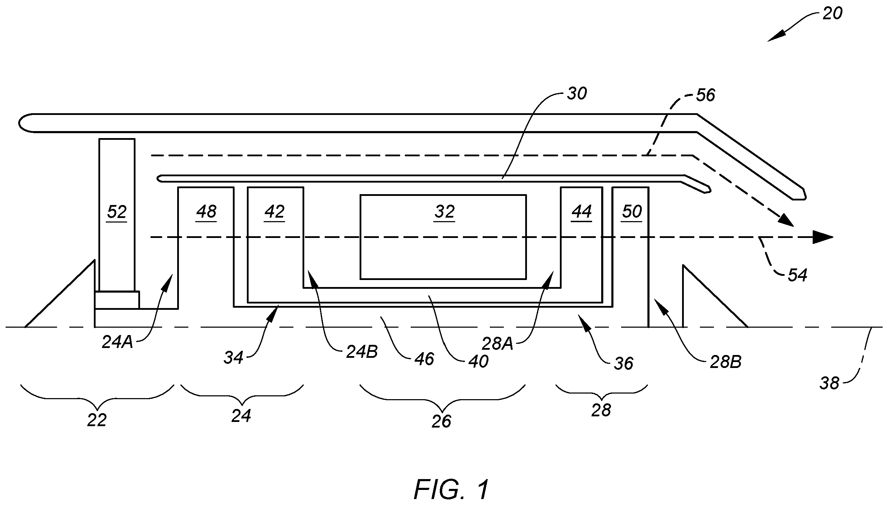

FIG. 1 schematically illustrates a gas turbine engine 20. The gas turbine engine 20 of FIG. 1 is a multi-spool turbofan gas turbine engine for an aircraft propulsion system. However, while the following description and accompanying drawings may refer to the turbofan gas turbine engine of FIG. 1 as an example, it should be understood that aspects of the present disclosure may be equally applicable to other types of gas turbine engines including, but not limited to, a turboshaft gas turbine engine, a turboprop gas turbine engine, a turbojet gas turbine engine, or a propfan (e.g., an open rotor) gas turbine engine.

The gas turbine engine 20 of FIG. 1 includes a fan section 22, a compressor section 24, a combustor section 26, a turbine section 28, and an engine static structure 30. The compressor section 24 of FIG. 1 includes a low-pressure compressor (LPC) 24A and a high-pressure compressor (HPC) 24B. The combustor section 26 includes a combustor 32 (e.g., an annular combustor). The turbine section 28 includes a high-pressure turbine (HPT) 28A and a low-pressure turbine (LPT) 28B.

Components of the fan section 22, the compressor section 24, and the turbine section 28 form a first rotational assembly 34 (e.g., a high-pressure spool) and a second rotational assembly 36 (e.g., a low-pressure spool) of the gas turbine engine 20. The first rotational assembly 34 and the second rotational assembly 36 are mounted for rotation about an axis 38 (e.g., a rotational axis, an axial centerline, etc.) of the gas turbine engine 20 relative to the engine static structure 30.

The first rotational assembly 34 includes a first shaft 40, a bladed first compressor rotor 42 for the high-pressure compressor 24B, and a bladed first turbine rotor 44 for the high-pressure turbine 28A. The first shaft 40 interconnects the bladed first compressor rotor 42 and the bladed first turbine rotor 44.

The second rotational assembly 36 includes a second shaft 46, a bladed second compressor rotor 48 for the low-pressure compressor 24A, and a bladed second turbine rotor 50 for the low-pressure turbine 28B. The second shaft 46 interconnects the bladed second compressor rotor 48 and the bladed second turbine rotor 50. The second shaft 46 may additionally be directly or indirectly coupled to a bladed fan rotor 52 for the fan section 22. For example, the second shaft 46 may be coupled to the bladed fan rotor 52 (e.g., an input shaft of the bladed fan rotor 52) by a reduction gear assembly configured to drive the bladed fan rotor 52 at a reduced rotational speed relative to the second shaft 46. The first shaft 40 and the second shaft 46 are concentric and configured to rotate about the rotational axis 38. The present disclosure, however, is not limited to concentric configurations of the first shaft 40 and the second shaft 46.

The engine static structure 30 may include one or more engine cases, cowlings, bearing assemblies, and/or other non-rotating structures configured to house and/or support (e.g., rotationally support) components of the gas turbine engine 20 sections 22, 24, 26, 28. The engine static structure 30 may form an exterior (e.g., an outer radial portion) of the gas turbine engine 20.

In operation of the gas turbine engine 20 of FIG. 1, ambient air is directed through the fan section 22 and into a core flow path 54 (e.g., an annular flow path) and a bypass flow path 56 (e.g., an annular flow path) by rotation of the bladed fan rotor 52. Airflow along the core flow path 54 is compressed by the low-pressure compressor 24A and the high-pressure compressor 24B, mixed and burned with fuel in the combustor 32, and then directed through the high-pressure turbine 28A and the low-pressure turbine 28B. The bladed first turbine rotor 44 and the bladed second turbine rotor 50 rotationally drive the first rotational assembly 34 and the second rotational assembly 36, respectively, in response to the combustion gas flow through the high-pressure turbine 28A and the low-pressure turbine 28B. The bypass flow path 56 may be disposed outside the engine static structure 30. For example, the engine static structure 30 and an outer aircraft propulsion system housing (e.g., a nacelle) may form an annular bypass duct radially therebetween, and airflow may be directed through the annular bypass duct along the bypass flow path 56.

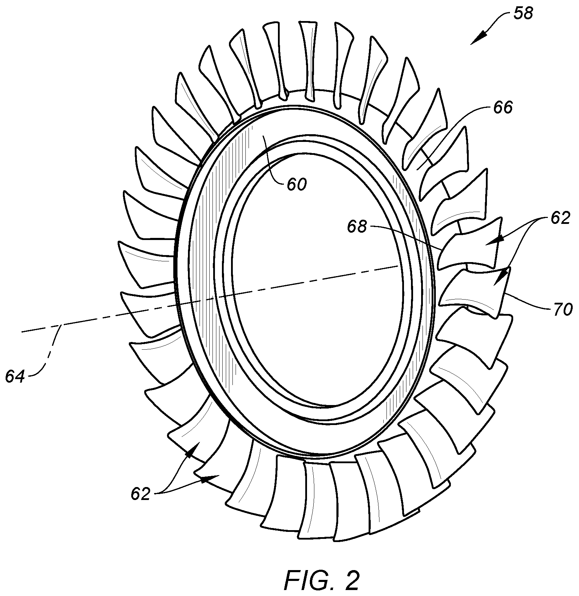

FIG. 2 illustrates a perspective view of a bladed disk 58. The bladed disk 58 may form a portion of a bladed rotor such as, but not limited to, the bladed first compressor rotor 42, the bladed first turbine rotor 44, the bladed second compressor rotor 48, and/or the bladed second turbine rotor 50. The bladed disk 58 of FIG. 2 includes a disk 60 and a plurality of blades 62 (e.g., airfoils). The disk 60 extends circumferentially about (e.g., completely around) an axis 64 (e.g., an axial centerline) of the bladed disk 58. The disk 60 forms all or a portion of a platform 66 of the bladed disk 58 on an outer radial side of the disk 60. The platform 66 extends circumferentially about (e.g., completely around) the axis 64. The blades 62 are arranged circumferentially on the disk 60 along the platform 66. The blades 62 may be mounted to the disk 60 at (e.g., on, adjacent, or proximate) the platform 66. For example, each of the blades 62 may be installed in a slot (e.g., a dovetail slot) formed by the disk 60. Alternatively, the bladed disk 58 (e.g., the disk 60 and the blades 62) may form an integrally bladed rotor ("IBR"; sometimes referred to as a "blisk").

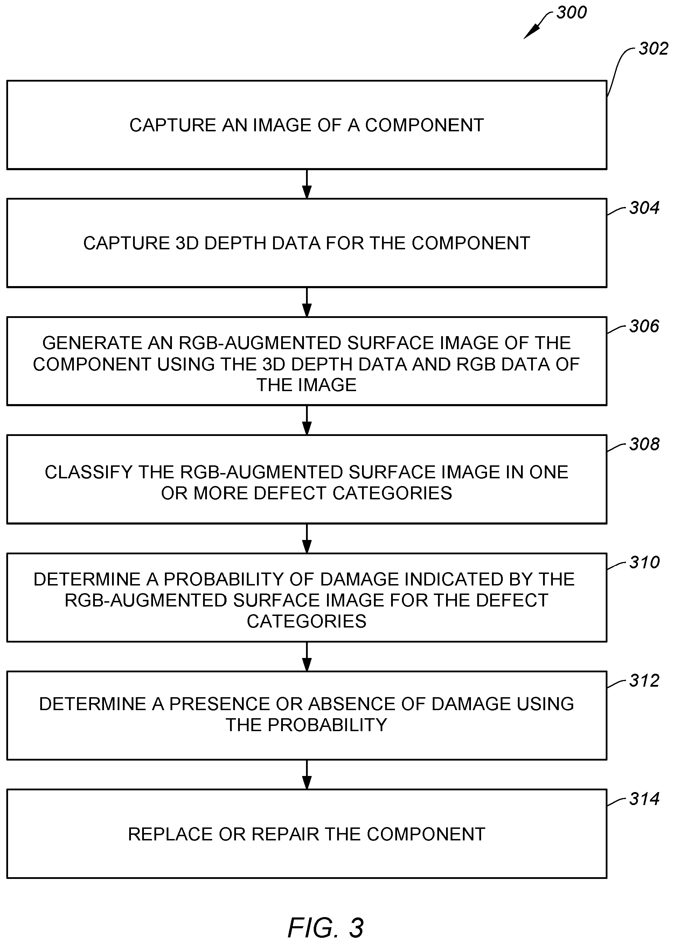

Referring to FIG. 3, a method 300 for inspecting a component (e.g., a gas turbine engine component) is provided. The method 300 may facilitate identification of one or more defects (e.g., surface defects) in an inspected component. Examples of component defects include physical damage such as, but not limited to, cracks, voids, dents, scratches, and the like. The term "defect," as used herein, refers to a physical anomaly present within a component which negatively affects the useful life or performance of the component. For ease of explanation, the method 300 is described herein for the blades 62 (e.g., components) of the bladed disk 58 (see FIG. 2). The present disclosure method 300, however, is not limited to inspection of rotor blades. Unless otherwise noted herein, it should be understood that the steps of method 300 are not required to be performed in the specific sequence in which they are discussed below and, in some embodiments, the steps of the method 300 may be performed separately or simultaneously.

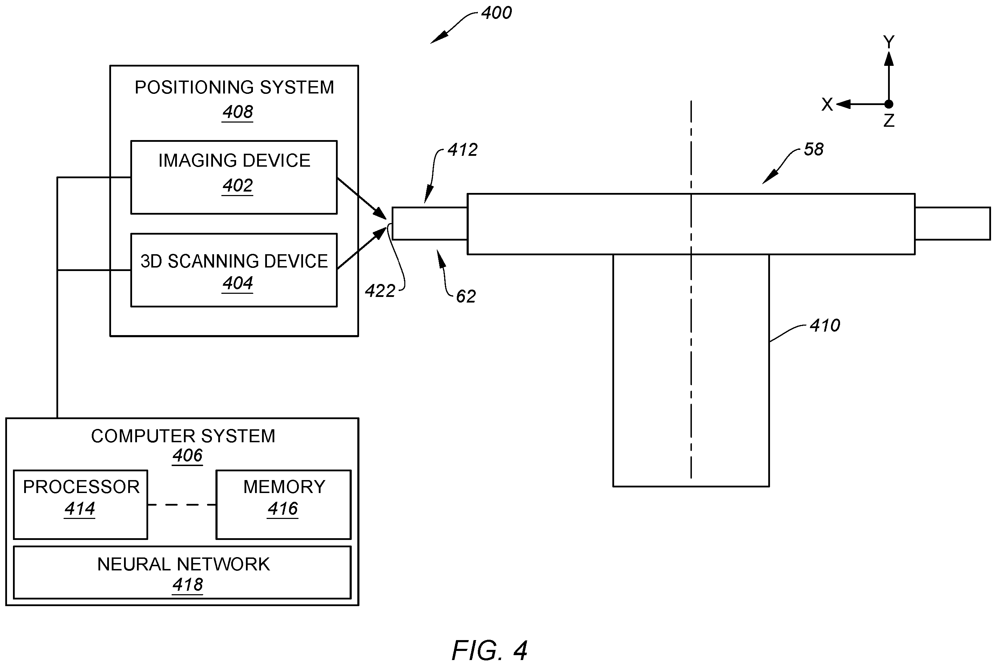

FIG. 4 schematically illustrates an exemplary component inspection system 400 which may be used to control and/or execute one or more of the steps of the method 300. This inspection system 400 may be in the form of an automated optical inspection system. For ease of explanation, steps of the method 300 will be described herein with respect to the inspection system 400, however, the method 300 is not limited to use with the particular inspection system 400 of FIG. 4. The inspection system 400 of FIG. 4 includes an imaging device 402, a three-dimensional (3D) scanning device 404, and a computer system 406. The inspection system 400 may include a positioning system 408 for the imaging device 402 and/or the 3D scanning device 404. The inspection system 400 may additionally include a positioning system 410 for a component 412.

The imaging device 402 is an image capture device configured as an optical device having an optical lens, such as a camera or other imaging device or image sensor, and capable of capturing two-dimensional (2D) still images. In particular, the imaging device 402 is configured to capture 2D images including RGB (red-green-blue) image data. This RGB image data may typically be characterized as an m-by-n-by-3 data array that defines red, green, and blue color components for each individual pixel of the captured images.

The 3D scanning device 404 is configured as a distance, range, and/or depth sensing device configured to capture depth data. Various depth sensing technologies and devices include, but are not limited to, a structured light measurement, phase shift measurement, time of flight measurement, stereo triangulation device, sheet of light triangulation device, light field cameras, coded aperture cameras, computational imaging techniques, simultaneous localization and mapping (SLAM), imaging radar, imaging sonar, echolocation, laser radar, scanning light detection and ranging (LIDAR), flash LIDAR, or a combination including at least one of the foregoing. Different technologies can include active (transmitting and receiving a signal) or passive (only receiving a signal) and may operate in a band of the electromagnetic or acoustic spectrum such as visual, infrared, ultrasonic, etc. The 3D scanning device 404 may be operable to generate depth data from defocus, a focal stack of images, or structure from motion.

The computer system 406 includes a processor 414 connected in communication (e.g., signal communication with memory 416. The processor 414 may include any type of computing device, computational circuit, or any type of process or processing circuit capable of executing a series of instructions that are stored in the memory 416, thereby causing the processor 414 to perform or control one or more steps or other processes. The processor 414 may include multiple processors and/or multicore CPUs and may include any type of processor, such as a microprocessor, digital signal processor, co-processors, a micro-controller, a microcomputer, a central processing unit, a field programmable gate array, a programmable logic device, a state machine, logic circuitry, analog circuitry, digital circuitry, etc., and any combination thereof. Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. The instructions may include an operating system, and/or executable software modules such as program files, system data, buffers, drivers, utilities, and the like. The executable instructions may apply to any functionality described herein to enable the inspection system 400 to accomplish the same algorithmically and/or by coordination of inspection system 400 components. For example, the memory 416 may include instructions which, when executed by the processor 414, cause the processor 414 to perform or control one or more steps or functions of the method 300. The memory 416 may include a single memory device or a plurality of memory devices (e.g., a computer-readable storage device that can be read, written, or otherwise accessed by a general purpose or special purpose computing device, including any processing electronics and/or processing circuitry capable of executing instructions). The present disclosure is not limited to any particular type of memory device, which may be non-transitory, and may include read-only memory, random access memory, volatile memory, non-volatile memory, static memory, dynamic memory, flash memory, cache memory, volatile or non-volatile semiconductor memory, optical disk storage, magnetic disk storage, magnetic tape, other magnetic storage devices, or any other medium capable of storing one or more instructions, and/or any device that stores digital information. The computer system 406 may include, or may be in communication with, an input device that enables a user to enter data and/or instructions, and may include, or be in communication with, an output device configured, for example to display information (e.g., a visual display or a printer), or to transfer data, etc. Communications between the computer system 406 and the imaging device 402 and the 3D scanning device 404 may be via a hardwire connection or via a wireless connection. A person of skill in the art will recognize that portions of the computer system 406 may assume various forms (e.g., digital signal processor, analog device, etc.) capable of performing the functions described herein.

The computer system 406 is configured to execute a neural network 418 to identify defects of the component 412 using data received from the imaging device 402 and the 3D scanning device 404. This neural network 418 may take the form of a deep-learning neural network. This deep-learning neural network may take the form of a U-Net neural network or another convolutional neural network configured to be trained to make predictions using image data, for example, by execution of image segmentation and/or instance segmentation techniques. The present disclosure, however, is not limited to any particular neural network 418 architecture. The neural network 418 may be trained using a supervised learning methodology and/or an unsupervised learning methodology. The neural network 418 trained using a supervised learning methodology may be prepared using a training process that includes making predictions based on a body of data, such as a training set of labeled component image data and refining those predictions until the neural network 418 achieves a desired level of accuracy. The refining process may typically include testing and validating the neural network 418 using the collected image data. In contrast to a supervised learning methodology, an unsupervised learning methodology may use unlabeled component image data to make predictions based on patterns that exist within the component image data. The process of generating the patterns may use various techniques, including but not limited to cluster analysis (e.g., hierarchical clustering, k-means, mixture models, DBSCAN, OPTICS, and the like), principal component, etc. The present disclosure is not limited to using any particular unsupervised learning methodology.

In some embodiments, the computer system 406 may be operable to control components of the inspection system 400 to capture component 412 inspection data including, for example, the 2D image data using the imaging device 402 and/or the 3D depth data using the 3D scanning device 404. The computer system 406 may be connected in signal communication with the imaging device 402 and/or the 3D scanning device 404 and configured to control the imaging device 402 and/or the 3D scanning device 404 to capture the 2D image data using the imaging device 402 and/or the 3D depth data using the 3D scanning device 404. The computer system 406 may be further connected in signal communication with the positioning system 408 and/or the positioning system 410 to facilitate relative positioning of the imaging device 402, the 3D scanning device 404, and the component 412 to capture image data and/or 3D depth data for different surfaces, surface portions, and viewpoints of the component 412. Instructions stored in the memory 416 and executed by the processor 414 to control operation of the inspection system 400 components may be in the form of a CNC programming language (e.g., G-code, M-code, etc.), or another suitable programming language which can be executed by the processor 414 to control positioning of the inspection system 400 components and/or the component 412. Alternatively, in some embodiments, operation and control of the imaging device 402, the 3D scanning device 404, the positioning system 408, and/or the positioning system 410 may be facilitated by a controller discrete from the computer system 406.

The inspection system 400 may include the positioning system 408 and/or the positioning system 410 for controlling relative positioning of the imaging device 402, the 3D scanning device 404, and the component 412. The positioning system 408 may be a robotic arm or other manipulator configured to move the imaging device 402 and the 3D scanning device 404, together or individually, relative to a machine coordinate system (MCS) or other reference position system of the inspection system 400. For example, the positioning system 408 may be operable to translate and/or rotate the imaging device 402 and the 3D scanning device 404 on and about one or more of an X-axis, a Y-axis, and a Z-axis. The positioning system 410 may be a rotatable platform or other manipulator configured to move (e.g., rotate) the component 412.

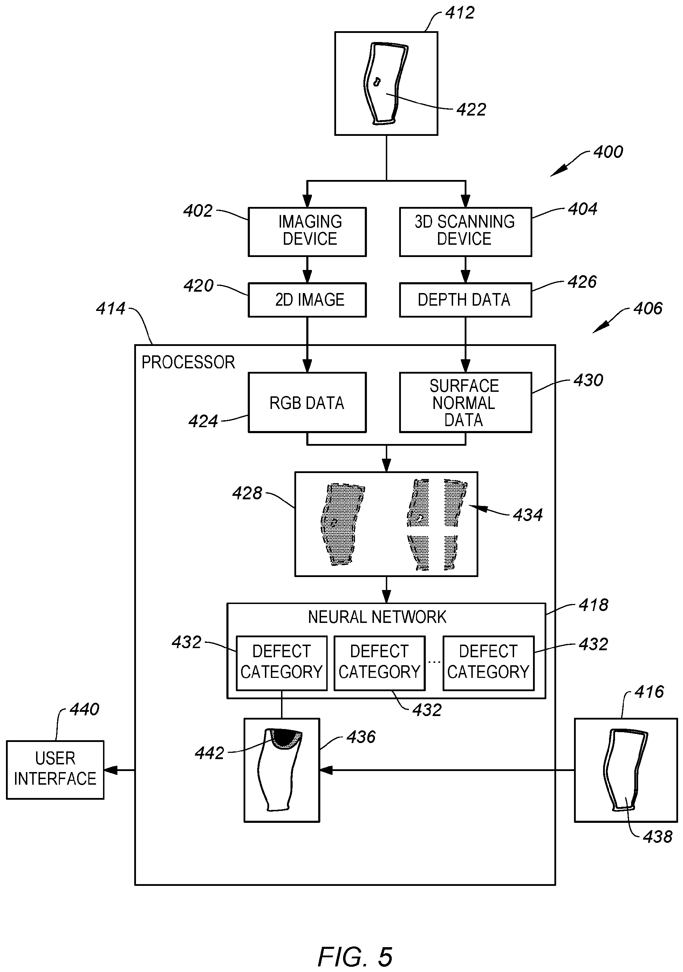

With additional reference to FIG. 5, step 302 includes capturing one or more images 420 (e.g., 2D images) of one or more surfaces 422 (e.g., exterior surfaces) of the component 412 with the imaging device 402. Each of the captured images 420 includes RGB image data 424. Step 304 includes capturing surface depth data 426 of the component 412, at the surfaces 422, with the 3D scanning device 404.

Step 306 includes processing (e.g., by the processor 414) the RGB image data 424 and the surface depth data 426 to generate an RGB-augmented surface image 428 of the component 412. The RGB image data 424 and the surface depth data 426 may be received by the computer system 406 (e.g., the processor 414) directly or indirectly from the imaging device 402 and the 3D scanning device 404, respectively. Step 306 includes estimating (e.g., by the processor 414) surface normal data 430 for the surfaces 422 using the surface depth data 426. The surface normal data 430 may be estimated, for example, using a 3D point cloud extracted from the surface depth data 426. A 3D point cloud may include a plurality of points or coordinates in a coordinate system having three dimensions, such as an x-y-z coordinate system or polar coordinate system.

In some embodiments, estimating the surface normal data 430 may include consolidating the surface depth data 426 from multiple 3D images or scanned surface portions of the component 412 by the 3D scanning device 404 to match or substantially match a larger surface portion of the component 412 captured by the imaging device 402 and represented in RGB 424. For example, the 3D scanning device 404 may have a smaller field-of-view than the imaging device 402 and, therefore, multiple 3D images or scanned surface portions of the component 412 may be used to match the RGB image data 424 captured by the imaging device 402 from a given viewpoint.

The RGB image data 424 is applied (e.g., by the processor 414) to the surface normal data 430 to generate the RGB-augmented surface image 428. Applying the RGB image data 424 to the surface normal data 430 may include projecting the surface normal data 430 to a perspective of the RGB image data 424 so as to generate the RGB-augmented surface image 428 matching the viewpoint of the image 420 and its RGB data 424.

Step 308 includes classifying (e.g., by the processor 414) the RGB-augmented surface image 428 in one or more selected defect categories 432. The processor 414 may execute the neural network 418 to process the RGB-augmented surface image 428 based on the defect categories 432 the neural network 418 has been trained to identify. The defect categories 432 may include surface defect feature categories such as, but not limited to, warping, stretching, edge defects, erosion, nicks, cracks, cuts, voids, dents, and the like. These different defect categories 432 may be broadly characterized as systemic damage categories (e.g., warping or stretching of component 412) and localized damage categories (e.g., edge defects, erosion, nicks, cracks, cuts, voids, dents, etc. of the component 412). In some embodiments, the RGB-augmented surface image 428 may be subdivided (e.g., cropped) into a plurality of image segments 434 and subsequently processed (e.g., serially processed) by the neural network 418 to facilitate reduced computational requirements of the computer system 406.

Step 310 includes determining, by the processor 414 for each of the selected defect categories 432, a probability that the RGB-augmented surface image 428 indicates damage of the component 412. The probability that the RGB-augmented surface image 428 indicates damage of the component 412 may be determined for a pixel (e.g., each pixel) of the RGB-augmented surface image 428, a grouping of pixels of the RGB-augmented surface image 428, or the RGB-augmented surface image 428 as a whole. For example, the processor 414 may determine, for each of the selected defect categories 432, that each pixel of the RGB-augmented surface image 428 indicates a first probability of damage belonging to a first of the defect categories 432, a second probability of damage belonging to a second of the defect categories 432, a third probability of damage belonging to a third of the defect categories 432, etc. The processor 414 may generate a defect probability map 436 which illustrates the determined probability that the RGB-augmented surface image 428 indicates damage of the component 412. For example, the probability that each pixel indicates damage in one of the defect categories 432 may be applied to the RGB-augmented surface image 428 to generate the defect probability map 436. The defect probability map 436 may visually indicate portions of the RGB-augmented surface image 428 as having greater or lesser probabilities of damage, for example, a high-probability damage area 442 as shown in FIG. 5. The defect probability maps 436 generated from multiple RGB-augmented surface images 428 of the component 412 may be consolidated to generate a defect probability map 436 indicative of the probability for one of the defect categories 432 over all or a substantial portion of the component 412. In some embodiments, the defect probability map 436 may be applied to a stored 3D model 438 of the component 412 (e.g., stored in memory 416) to generate a 3D representation of the probability map 436 for the component 412. Once generated, the probability map 436 may be rescaled to a native resolution of the image 420. This rescaled probability map 436 may be displayed, for example, at a user interface 440.

In some embodiments, the method 300 may include step 312 for determining (e.g., by the processor 414) a presence or an absence of damage to the component 412 for the (e.g., each) selected defect categories 432. Step 312 may include determining the presence or absence of damage by comparing the probability of damage to a threshold. Damage may be determined to be present if the probability meets or exceeds a threshold. Conversely, damage may be determined to be absent if the probability is less than the threshold. Step 312 may include determining the damage is acceptable or unacceptable, and may determine if the component 412 should be accepted or rejected, wherein a rejected component would indicate that the component 412 should be repaired or replaced. The determination that the damage to the component 412 is acceptable or unacceptable may be made by comparing the identified presence of damage to one or more predetermined acceptance rules (e.g., damage limits) specific to the particular defect category 432 for which the damage is identified. Step 312 may further include displaying a damage report and/or a determination or recommendation that the component 412 be accepted or rejected, for example, at the user interface 440. The computer system 406 may (e.g., automatically) store (e.g., in memory 416) the defect probability map 436, characteristics of the identified damage, or other component 412 characteristics for each of the analyzed defect categories 432. The stored probability maps 436 and/or damage characteristics may be combined across a plurality of inspected components to estimate component damage trends.

In some embodiments, the method 300 may include step 314 for replacing or repairing the component 412 in response to the identification (e.g., by the processor 414) that the component 412 is unacceptable and should be replaced or repaired. Component 412 repair may be performed using any conventionally-known repair technique, or a combination of repair techniques, specific to the component 412 type and identified damage.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims, and should be understood as falling within the scope of the claims unless explicitly stated otherwise.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. An inspection system (400) for inspection of a component (412) for a gas turbine engine (20), the inspection system (400) comprising:
an imaging device (402) configured to capture a two-dimensional (2D) image (420) of a surface (422) of the component (412), the 2D image (420) including RGB image data (424);
a three-dimensional (3D) scanning device (404) configured to capture surface depth data (426) of the component (412) at the surface (422); and
a computer system (406) including a processor (414) connected in signal communication with a non-transitory memory (416) storing instructions which, when executed by the processor (414), cause the processor (414) to:
receive, at the processor (414), the RGB image data (424) captured by the imaging device (402) and the surface depth data (426) captured by the 3D scanning device (404);
estimate, by the processor (414), surface normal data (430) of the surface (422) using the surface depth data (426);
apply, by the processor (414), the RGB image data (424) to the surface normal data (430) to generate an RGB-augmented surface image (428);
classify, by the processor (414), the RGB-augmented surface image (428) in at least one selected defect category (432); and
determine, by the processor (414) for each of the at least one selected defect category (432), a probability that the RGB-augmented surface image (428) indicates damage of the component (412).

2. The inspection system (400) of claim 1, wherein the instructions, when executed by the processor (414), further cause the processor (414) to classify the RGB-augmented surface image (428) in the at least one selected defect category (432) by executing a neural network (418) trained to identify the damage in each of the at least one selected defect category (432), and/or wherein the at least one selected defect category (432) includes one or more of a warping category, a stretching category, an edge defect category, an erosion category, a nick category, a crack category, or a dent category.

3. The inspection system (400) of claim 1 or 2, wherein the instructions, when executed by the processor (414), further cause the processor (414) to estimate the surface normal data (430) by extracting a 3D point cloud from the surface depth data (426), and/or by projecting the surface normal data (430) to a viewpoint perspective of the RGB image data (424).

4. The inspection system (400) of claim 1, 2 or 3, wherein the RGB-augmented surface image (428) includes a plurality of pixels, and the instructions, when executed by the processor (414), further cause the processor (414) to determine the probability that the RGB-augmented surface image (428) indicates damage of the component (412) for each of the plurality of pixels,
optionally wherein the instructions, when executed by the processor (414), further cause the processor (414) to generate a defect probability map (436) for each of the at least one selected defect category (432) using the probability determined for each of the plurality of pixels, and
optionally wherein the instructions, when executed by the processor (414), further cause the processor (414) to apply the defect probability map (436) to a 3D model (438) of the component (412) stored in the non-transitory memory (416).

5. The inspection system (400) of any preceding claim, wherein the instructions, when executed by the processor (414), further cause the processor (414) to determine a presence or an absence of the damage by comparing the probability to a threshold, the presence of the damage is identified where the probability meets or exceeds the threshold, and the absence of the damage is identified where the probability is less than the threshold.

6. The inspection system (400) of any preceding claim, wherein the computer system (406) is connected in signal communication with the imaging device (402) and the 3D scanning device (404), and the instructions, when executed by the processor (414), further cause the processor (414) to control:
the imaging device (402) to capture the 2D image (420); and
the 3D scanning device (404) to capture the surface depth data (426).

7. The inspection system (400) of any preceding claim, further comprising a positioning system (408), the imaging device (402) and the 3D scanning device (404) are attached to the positioning system (408), and the instructions, when executed by the processor (414), further cause the processor (414) to control the positioning system (408) to position the imaging device (402) and the 3D scanning device (404) relative to the component (412).

8. A method for inspecting a component (412) for a gas turbine engine (20) with an inspection system (400), the method comprising:
capturing a two-dimensional (2D) image (420) of a surface (422) of the component (412) with an imaging device (402), the 2D image (420) including RGB image data (424);
capturing surface depth data (426) at the surface (422) with a three-dimensional (3D) scanning device (404);
receiving, by a processor (414) of a computer system (406), the RGB image data (424) and the surface depth data (426);
estimating, by the processor (414), surface normal data (430) of the surface (422) using the surface depth data (426);
applying, by the processor (414), the RGB image data (424) to the surface normal data (430) to generate an RGB-augmented surface image (428);
classifying, by the processor (414), the RGB-augmented surface image (428) in at least one selected defect category (432); and
determining, by the processor (414) for each of the at least one selected defect category (432), a probability that the RGB-augmented surface image (428) indicates the damage of the component (412).

9. The method of claim 8, wherein classifying the RGB-augmented surface image (428) in the at least one selected defect category (432) includes executing, by the processor (414), a neural network (418) trained to identify the damage in each of the at least one selected defect category (432).

10. The method of claim 9, wherein the neural network (418) is a convolutional neural network (418) configured to apply an image segmentation technique to the RGB-augmented surface image (428).

11. The method of claim 8, 9 or 10, wherein the at least one selected defect category (432) includes one or more of a warping category, a stretching category, an edge defect category, an erosion category, a nick category, a crack category, or a dent category.

12. The method of any of claims 8 to 11, further comprising subdividing, by the processor (414), the RGB-augmented surface image (428) into a plurality of RGB-augmented surface image portions, wherein classifying the RGB-augmented surface image (428) in the at least one selected defect category (432) includes classifying each of the RGB-augmented surface image portions in the at least one selected defect category (432).

13. The method of claims 8 to 12, wherein the RGB-augmented surface image (428) includes a plurality of pixels, the method further comprising determining, by the processor (414), the probability that the RGB-augmented surface image (428) indicates the damage of the component (412) for each of the plurality of pixels and generating, by the processor (414), a defect probability map (436) for each of the at least one selected defect category (432) using the probability determined for each of the plurality of pixels, and optionally further comprising applying, by the processor (414), the defect probability map (436) to a 3D model (438) of the component (412) to generate a 3D defect probability map (436).

14. The method of any of claims 8 to 13, further comprising determining, by the processor (414), a presence or an absence of the damage by comparing the probability to a threshold, the presence of the damage is identified where the probability meets or exceeds the threshold, and the absence of the damage is identified where the probability is less than the threshold.

15. The method of any of claims 8 to 14, further comprising applying, by the processor (414), at least one predetermined acceptance rule to the damage, in response to identifying the presence of the damage, to determine that the component (412) is unacceptable, and repairing or replacing the component (412) in response to determining the component (412) is unacceptable.
